# EUROPEAN PATENT APPLICATION

(11) **EP 3 293 966 A1**
(43) Date of publication of application: **14.03.2018**
(21) Application number: 15893736.7
(22) Date of filing: 04.06.2015
(51) Int. Cl.: H04N 5/445

(54) **SCHEDULING METHOD, DEVICE, AND DIGITAL VIDEO APPARATUS FOR TELEVISION PROGRAM**

(71) Applicant: Huawei Technologies Co. Ltd., Shenzhen, Guangdong 518129 (CN)
(72) Inventor: LUO, Jing, Shenzhen Guangdong 518129 (CN); MA, Jianfei, Shenzhen Guangdong 518129 (CN)
(74) Representative: Goddar, Heinz J.
(86) International application number: PCT/CN2015/080774
(87) International publication number: WO 2016/192080

(57) **Abstract**

This application discloses a method and an apparatus for scheduling a television program, and a digital video device. The method includes: obtaining, by a digital video device, a key word entered by a user, where an electronic program guide EPG database that includes television program information of multiple channels in different time periods is set in the digital video device; traversing the EPG database to find a television program that matches the key word; setting the found television program as a scheduled television program of the user; and performing scheduling processing on the scheduled television program at a time at which the scheduled television program is played. Based on the foregoing manner, a television program can be intelligently and quickly scheduled.

## Description

### TECHNICAL FIELD

This application relates to the field of video playback technologies, and in particular to a method and an apparatus for scheduling a television program, and a video device.

### BACKGROUND

Currently, commonly-used digital video devices include a digital video broadcasting (English: Digital Video Broadcasting, DVB for short) set top box, a digital television, an over-the-top (OTT for short, referring to an Internet-based video service) set top box, and the like. All the devices can obtain electronic program guide (English: Electronic Program Guide, EPG for short) information, and present, in a user interface of a television, a list of television programs in an EPG that are to be played in different channels in a next time period, so that a user selects a television program to play or record. Generally, a digital video device further provides a function of scheduling a television program. The user may browse a list of television programs in an EPG to select a television program that the user desires to watch or record. After television program scheduling is completed, the digital video device automatically plays or records the television program when a time at which the television program is played is reached.

However, an existing digital video device can display only a list of television programs in an EPG and information related to the list. When scheduling a television program, the user needs to manually search mass lists of television programs one by one for the television program to implement scheduling. Consequently, a scheduling operation is relatively time-consuming.

### SUMMARY

This application provides a method and an apparatus for scheduling a television program, and a video device, so as to intelligently and quickly schedule a television program.

A first aspect of this application provides a method for scheduling a television program, including: obtaining, by a digital video device, a key word entered by a user, where an electronic program guide EPG database that includes television program information of multiple channels in different time periods is set in the digital video device; traversing the EPG database to find a television program that matches the key word; setting the found television program as a scheduled television program of the user; and performing scheduling processing on the scheduled television program at a time at which the scheduled television program is played.

With reference to the first aspect, in a first possible implementation of the first aspect, the scheduled television program includes scheduled television programs of multiple users and/or multiple groups of scheduled television programs of a user, and each group of scheduled television programs corresponds to one group of key words entered by a user; and the performing scheduling processing on the scheduled television program at a time at which the scheduled television program is played includes: determining whether a conflict exists between times at which the scheduled television programs are played, and if yes, selecting a scheduled television program with a highest priority from the scheduled television programs that conflict with each other, and performing scheduling processing on the scheduled television program with the highest priority at a time at which the scheduled television program with the highest priority is played, where the priority is determined by at least one of a user, a type, a channel, and a play time of a scheduled television program, or a type of scheduling processing; and performing, at times at which the scheduled television programs that do not conflict with each other are played, scheduling processing on the scheduled television programs that do not conflict with each other.

With reference to the first aspect, in a second possible implementation of the first aspect, the setting the found television program as a scheduled television program of the user includes: sending information about the found television program to an associated terminal; and receiving a television program fed back by the terminal, and using the television program as the scheduled television program of the user.

With reference to the first aspect, in a third possible implementation of the first aspect, before the setting the found television program as a scheduled television program of the user, the method further includes: tracking an update of the EPG database if the television program that matches the key word is not found in the EPG database; and when the EPG database is updated, searching updated television program information for the television program that matches the key word.

With reference to any one of the first aspect, or the first to the third possible implementations of the first aspect, in a fourth possible implementation of the first aspect, the scheduling processing includes at least one of playing, recording, shielding, or prompting on the digital video terminal or an associated terminal.

A second aspect of this application provides an apparatus for scheduling a television program, including: an obtaining module, a searching module, a setting module, and a processing module, where the obtaining module is configured to obtain a key word entered by a user, and send the key word to the searching module, where an electronic program guide EPG database that includes television program information of multiple channels in different time periods is set in the digital video device; the searching module is configured to traverse the EPG database to find a television program that matches the key word, and send the found television program to the setting module; the setting module is configured to set the found television program as a scheduled television program of the user; and the processing module is configured to perform scheduling processing on the scheduled television program at a time at which the scheduled television program is played.

With reference to the second aspect, in a first possible implementation of the second aspect, the scheduled television program includes scheduled television programs of multiple users and/or multiple groups of scheduled television programs of a user, and each group of scheduled television programs corresponds to one group of key words entered by a user; and the processing module is specifically configured to: determine whether a conflict exists between times at which the scheduled television programs are played, and if the conflict exists, select a scheduled television program with a highest priority from the scheduled television programs that conflict with each other, and perform scheduling processing on the scheduled television program with the highest priority at a time at which the scheduled television program with the highest priority is played, where the priority is determined by at least one of a user, a type, a channel, and a play time of a scheduled television program, or a type of scheduling processing; and perform, at times at which the scheduled television programs that do not conflict with each other are played, scheduling processing on the scheduled television programs that do not conflict with each other.

With reference to the second aspect, in a second possible implementation of the second aspect, the setting module includes a sending unit and a receiving unit, where the sending unit is configured to send information about the found television program to an associated terminal; and the receiving unit is configured to receive a television program fed back by the terminal, and use the television program as the scheduled television program of the user.

With reference to the second aspect, in a third possible implementation of the second aspect, the apparatus further includes: a tracking module, where the tracking module is configured to track an update of the EPG database if the television program that matches the key word is not found in the EPG database; and the searching module is further configured to: when the EPG database is updated, search updated television program information for the television program that matches the key word.

With reference to any one of the second aspect, or the first to the third possible implementations of the second aspect, in a fourth possible implementation of the second aspect, the scheduling processing includes at least one of playing, recording, shielding, or prompting on the apparatus or an associated terminal.

A third aspect of this application provides a digital video device, including: a processor, a receiver, and a memory, where the receiver is configured to receive an electronic program guide EPG that includes television program information of multiple channels in different time periods; the memory is configured to provide an instruction for the processor, and store an electronic program guide EPG database that includes television program information of multiple channels in different time periods; and the processor executes the instruction, so as to: obtain a key word entered by a user; traverse the EPG database to find a television program that matches the key word; set the found television program as a scheduled television program of the user; and perform scheduling processing on the scheduled television program at a time at which the scheduled television program is played.

With reference to the third aspect, in a first possible implementation of the third aspect, the scheduled television program includes scheduled television programs of multiple users and/or multiple groups of scheduled television programs of a user, and each group of scheduled television programs corresponds to one group of key words entered by a user; and that the processor executes the performing scheduling processing on the scheduled television program at a time at which the scheduled television program is played includes: determining whether a conflict exists between times at which the scheduled television programs are played, and if the conflict exists, selecting a scheduled television program with a highest priority from the scheduled television programs that conflict with each other, and performing scheduling processing on the scheduled television program with the highest priority at a time at which the scheduled television program with the highest priority is played, where the priority is determined by at least one of a user, a type, a channel, and a play time of a scheduled television program, or a type of scheduling processing; and performing, at times at which the scheduled television programs that do not conflict with each other are played, scheduling processing on the scheduled television programs that do not conflict with each other.

With reference to the third aspect, in a second possible implementation of the third aspect, the digital video device further includes: a transmitter, where that the processor executes the setting the found television program as a scheduled television program of the user includes: sending information about the found television program to an associated terminal by using the transmitter; and receiving, by using the receiver, a television program fed back by the terminal, and using the television program as the scheduled television program of the user.

With reference to the third aspect, in a third possible implementation of the third aspect, the processor is further configured to: track an update of the EPG database if the television program that matches the key word is not found in the EPG database; and when the EPG database is updated, search updated television program information for the television program that matches the key word.

With reference to any one of the third aspect, or the first to the third possible implementations of the third aspect, in a fourth possible implementation of the third aspect, the scheduling processing includes at least one of playing, recording, shielding, or prompting on the digital video terminal or an associated terminal.

In the foregoing solutions, a digital video device can find a related television program from an EPG database according to a key word entered by a user, and automatically perform corresponding scheduling processing on the television program at a time at which the television program is played. The user does not need to blindly search lists of television programs in the EPG for the television program one by one to schedule the television program. Therefore, the television program is intelligently and quickly scheduled.

### BRIEF DESCRIPTION OF DRAWINGS

FIG. 1 is a flowchart of an implementation of a method for scheduling a television program according to this application;
FIG. 2 is a partial flowchart of another implementation of a method for scheduling a television program according to this application;
FIG. 3 is a schematic structural diagram of an implementation of an apparatus for scheduling a television program according to this application;
FIG. 4 is a schematic structural diagram of another implementation of an apparatus for scheduling a television program according to this application; and
FIG. 5 is a schematic structural diagram of an implementation of a digital video device according to this application.

### DESCRIPTION OF EMBODIMENTS

In the following description, to illustrate rather than limit, specific details such as a particular system structure, an interface, and a technology are provided to make a thorough understanding of this application. However, a person skilled in the art should know that this application may be practiced in other implementations without these specific details. In other cases, detailed descriptions of well-known apparatuses, circuits, and methods are omitted, so that this application is described without being obscured by unnecessary details.

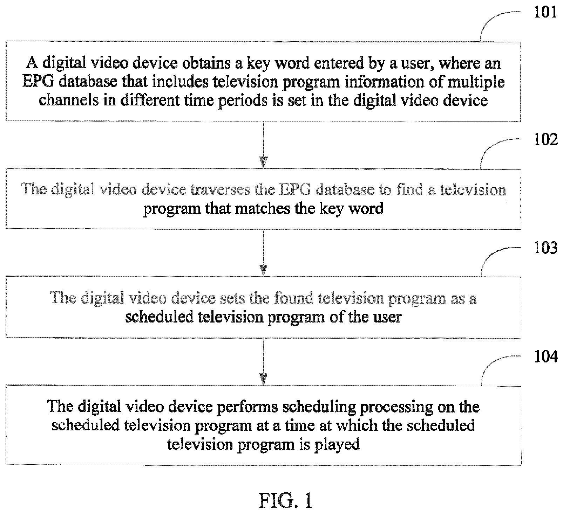

Referring to FIG. 1, FIG. 1 is a flowchart of an implementation of a method for scheduling a television program according to this application. In this implementation, the method includes the following steps.
101. A digital video device obtains a key word entered by a user, where an EPG database that includes television program information of multiple channels in different time periods is set in the digital video device.

In this implementation, the digital video device is a device that can obtain EPG information, and process a television program in an EPG such as playing or recording the television program. For example, the device is a set top box such as a DVB set top box, an OTT set top box, or an Internet Protocol television (English: Internet Protocol Television, IPTV for short) set top box, a digital television, or a digital television recorder. The digital video device may regularly obtain the EPG information from an EPG system, and establish the EPG database. The EPG database includes the television program information of the multiple channels in the different time periods. Generally, television programs stored in the EPG database are played in next seven days to ten days. Information about each television program may include a name, a start play time, an end play time, a category, a brief introduction, a specific description, and the like of the television program.

A key word searching function is set in the digital video device. After receiving an input instruction of the user, the digital video device obtains the key word entered by the user.
102. The digital video device traverses the EPG database to find a television program that matches the key word.

For example, key words that are entered by the user and that are obtained by the digital video device are: 2015, Premier League, and finals. The digital video device traverses all recent television program information programming in all channels of the EPG database to find a television program whose television program information includes the three key words: 2015, Premier League, and finals.

It should be noted that this implementation proposes searching, by using the digital video device, the television program information in the EPG, that is, intelligently searching live broadcast television programs, so that the user performs scheduling processing on a television program that is to be live broadcast.
103. The digital video device sets the found television program as a scheduled television program of the user.

For example, after finding the television program, the digital video device may add automatically or add, according to an instruction of the user, the found television program to a scheduling list of this user, and use the television program as the scheduled television program that corresponds to the key word of the user.
104. The digital video device performs scheduling processing on the scheduled television program at a time at which the scheduled television program is played.

After setting the scheduled television program, the digital video device obtains the time at which the scheduled television program is played, and performs scheduling processing on the scheduled television program when the play time is reached. The scheduling processing may include at least one of playing, recording, shielding, or prompting on the digital video terminal or an associated terminal. The associated terminal may be a prebound terminal, or another terminal that can communicate with the data video device. The prompting may be in a subtitle manner or a ringtone manner. For example, if the digital video device finds, according to the foregoing key words entered by the user, a final of the Premier League in 2015 that is to be played from 20 o'clock to 22 o'clock tomorrow in a sports channel, the digital video device automatically switches to the sports channel to perform playing at 20 o'clock tomorrow, or reminds, at 20 o'clock tomorrow or 5 minutes earlier by using a voice or a television interface, the user that the scheduled television program is to be played. A specific type of the scheduling processing may be preset by the user.

In this implementation, a digital video device can find a related television program from an EPG database according to a key word entered by a user, and automatically perform corresponding scheduling processing on the television program at a time at which the television program is played. The user does not need to blindly search lists of television programs in the EPG for the television program one by one to schedule the television program. Therefore, the television program is intelligently and quickly scheduled.

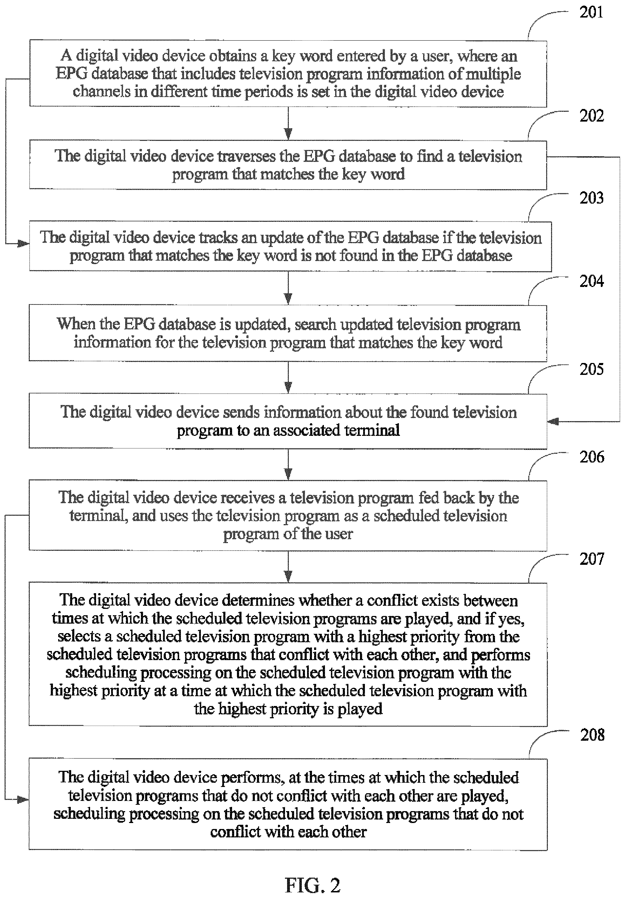

Referring to FIG. 2, FIG. 2 is a flowchart of another implementation of a method for scheduling a television program according to this application. In this implementation, the method includes the following steps.
201. A digital video device obtains a key word entered by a user, where an EPG database that includes television program information of multiple channels in different time periods is set in the digital video device.

In this implementation, the digital video device may implement key word searching and program scheduling of multiple users for multiple times. That is, the digital video device may include scheduled television programs of multiple users and/or multiple groups of scheduled television programs of a user, and each group of scheduled television programs corresponds to one group of key words entered by a user. For example, the digital video device establishes a key word management library of multiple users. Each time a group of key words entered by a user in a corresponding key word management library of the user is received, a television program that matches the group of key words is found in the EPG database according to the method of the foregoing implementation or this implementation, and is used as a scheduled television program, so as to meet scheduling processing of multiple television programs of the multiple users.
202. The digital video device traverses the EPG database to find a television program that matches the key word.

For example, a group of key words that are entered by a user A and that are obtained by the digital video device is: 2015, Man Utd, soccer, and game. The digital video device traverses all recent television program information programming in all channels in a present/following/event schedule EIT table of an actual/other TS to find a television program whose television program information includes the four key words: 2015, Man Utd, soccer, and game.
203. The digital video device tracks an update of the EPG database if the television program that matches the key word is not found in the EPG database.

In the foregoing step 202, if the digital video device does not find the matched television program after traversing the EPG database, that is, the television program is not to be live broadcast in a next time period such as next seven days to ten days, the digital video device tracks the update of the EPG database, such as regularly detecting whether the EPG database is updated. The digital video device may regularly perform updating according to an update law of the EPG database. For example, the EPG database is usually updated regularly. For example, the EPG database is dynamically updated every day or every week, to obtain information about television programs to be live broadcast in a current or future time period. The digital video device may correspondingly detect an update status of the EPG database every day at zero o'clock or at weekly intervals.
204. When the EPG database is updated, search updated television program information for the television program that matches the key word.

When the update of the EPG database is tracked, the updated television program information is searched for the television program that matches the key word. If the television program is not found, the update of the EPG database is tracked, and updated television programs are searched until the television program that matches the key word is found, or an instruction of stopping intelligent searching that is entered by the user is received.

It may be understood that, when the foregoing step 202 is performed, if the matched television program is found in the EPG database, the digital video device can also continue to track the update of the EPG and search updated television programs to ensure that all potential television programs that match the key word are found until an instruction of stopping intelligent searching that is entered by the user is received.
205. The digital video device sends information about the found television program to an associated terminal.

In this implementation, the digital video device establishes an association with one or more terminals in advance. For example, the digital video device communicates with the terminal by using a wired or a wireless channel and is bound to the terminal. The terminal may be specifically a mobile phone, a tablet computer, a desktop computer, or the like. For example, the digital video device is bound to a mobile phone of the user A in advance. After finding the television program that matches the group of key words entered by the user A in the foregoing step 202 or step 204, the digital video device sends information about the found television program to the mobile phone of the user A, so that the user A can select a program from the found television program.

It may be understood that when the digital video device is associated with terminals of multiple users, the digital video device may further send information about a found television program to a terminal of a corresponding user according to the user to which the television program belongs.
206. The digital video device receives a television program fed back by the terminal, and uses the television program as a scheduled television program of the user.

For example, after obtaining the television program that is selected by the user A from the foregoing found television program, the terminal feeds the selected television program back to the digital video device. The digital video device determines, as a scheduled television program of the user A, the television program that is fed back by the terminal and that is selected by the user A, stores, in a scheduling list of the user A, information about the scheduled television program such as a name, a start play time, an end play time, a play channel, and a brief introduction, and establishes, in the scheduling list, a mapping relationship between the scheduled television program and a group of corresponding matched key words.

It may be understood that in another implementation, the digital video device does not have to send the information about the television program to the associated terminal, but may directly display the information about the television program on a display interface of the digital video device, and determine the scheduled television program according to selection of the user.
207. The digital video device determines whether a conflict exists between times at which the scheduled television programs are played, and if yes, selects a scheduled television program with a highest priority from the scheduled television programs that conflict with each other, and performs scheduling processing on the scheduled television program with the highest priority at a time at which the scheduled television program with the highest priority is played.

The scheduled television program in this implementation includes scheduled television programs of multiple users and/or multiple groups of scheduled television programs of a user. Each group of scheduled television programs corresponds to one group of key words entered by a user, and each group of scheduled television programs may include one or more scheduled television programs. Therefore, after determining the scheduled television program, the digital video device determines whether the conflict exists between the times at which all the scheduled television programs that are set by the digital video device are played. The conflict is that the play times overlap. If yes, the scheduled television program with the highest priority is selected from the scheduled television programs that conflict with each other, scheduling processing is performed on the scheduled television program with the highest priority at the time at which the scheduled television program with the highest priority is played, and scheduling processing is not performed on a scheduled television program without the highest priority in the scheduled television programs that conflict with each other. The priority is determined by at least one of a user, a corresponding key word, and a play time of a scheduled television program, or a type of scheduling processing.

Three cases in which a priority is determined are enumerated in the following:
(1) If scheduled television programs that conflict with each other belong to different users, a priority of a user may be determined according to a preset priority list of users, or a usage proportion of different users in different time periods. In a play time period in which a conflict occurs, a higher usage proportion of a user indicates a higher priority of a television program of the user.
(2) If there are scheduled television programs that conflict with each other and that belong to a same user, a priority of a television program may be determined according to frequency at which television programs of different types and/or in different channels are played in different time periods. In a play time period in which a conflict occurs, higher play frequency of television programs of a type or in a channel indicates a higher priority.
(3) If scheduling processing of scheduled television programs that conflict with each other has different types, highest priorities may be set for types of recording, shielding, and prompting in scheduling processing, and a program with a highest priority is selected, as a television program with a highest priority according to (1) and (2), from the scheduled television programs whose type is playing and that conflict with each other.

In the foregoing three cases, (3), (1) and (2) are of descending priorities, that is, the types of recording, shielding, and prompting in the scheduling processing are of the highest priorities without a comparison of users, and a comparison of program types or channels. For a television program whose type is playing, a user with a highest usage proportion is first determined, and a television program whose type or channel has highest play frequency is then determined from television programs of the user with the highest usage proportion as a television program with a highest priority. It should be noted that in the foregoing conflict processing, in consideration of a feature that playing needs to uniquely occupy one television program, only one television program that is with a highest priority and that is scheduled for playing is determined at a play time at which a conflict occurs, and corresponding processing may be performed on television programs of remaining scheduling processing types at play times by using each of the television programs as a television program of a highest priority.
208. The digital video device performs, at the times at which the scheduled television programs that do not conflict with each other are played, scheduling processing on the scheduled television programs that do not conflict with each other.

The scheduling processing includes at least one of playing, recording, shielding, or prompting on the digital video terminal or an associated terminal. Television programs of different users may be respectively recorded on corresponding memories, and scheduling processing of different scheduled television programs may be set differently. For example, scheduling processing of a scheduled television program a that is determined according to a group of key words entered by a user A is playing; scheduling processing of a scheduled television program b that is determined according to a group of key words entered by a user B is recording; scheduling processing of a scheduled television program c that is determined according to a group of key words entered by a user C is shielding; scheduling processing of a scheduled television program d that is determined according to a group of key words entered by a user D is prompting. When the scheduled television program a starts to be live broadcast, the digital video device automatically switches to a channel of a to live broadcast a. When the scheduled television program b is live broadcast, the digital video device automatically records the program b to a storage area corresponding to the user B. When the scheduled television program c is live broadcast, the digital video device automatically hides a channel of c. When the scheduled television program d starts to be live broadcast, the digital video device automatically makes, on a television interface, a notification that the program d is to be started.

In this implementation, scheduled television programs of multiple users may also be set, and a television program that is not live broadcast recently can also be scheduled intelligently, so as to improve user experience. When a conflict exists between times at which multiple scheduled television programs are played, a scheduled television program with a highest priority is automatically identified, and scheduling processing is performed on the scheduled television program. This further improves intelligence of a scheduling operation. In addition, the digital video device may also be associated with a terminal, and the terminal is used to screen and schedule television programs, or to further control the digital video device.

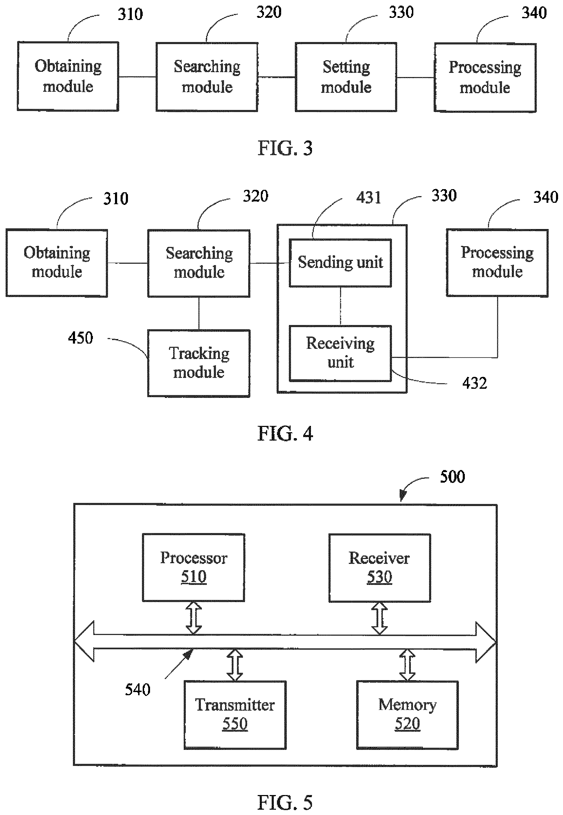

Referring to FIG. 3, FIG. 3 is a schematic structural diagram of an implementation of an apparatus for scheduling a television program according to this application. In this implementation, the apparatus includes an obtaining module 310, a searching module 320, a setting module 330, and a processing module 340.

The obtaining module 310 is configured to obtain a key word entered by a user, and send the key word to the searching module 320, where an electronic program guide EPG database that includes television program information of multiple channels in different time periods is set in the digital video device.

In this implementation, the obtaining module 310 may regularly obtain EPG information from an EPG system, and establish the EPG database. The EPG database includes the television program information of the multiple channels in the different time periods. Generally, television programs stored in the EPG database are played in next seven days to ten days. Information about each television program may include a name, a start play time, an end play time, a category, a brief introduction, a specific description, and the like of the television program.

A key word searching function is set in the obtaining module 310. After receiving an input instruction of the user, the digital video device obtains the key word entered by the user.

The searching module 320 is configured to traverse the EPG database to find a television program that matches the key word, and send the found television program to the setting module 330.

For example, key words that are entered by the user and that are obtained by the obtaining module 310 are: 2015, Premier League, and finals. The searching module 320 traverses all recent television program information programming in all channels of the EPG database to find a television program whose television program information includes the three key words: 2015, Premier League, and finals.

The setting module330 is configured to set the found television program as a scheduled television program of the user.

For example, after the searching module 320 finds the television program, the setting module 330 may add automatically or add, according to an instruction of the user, the found television program to a scheduling list of this user, and use the television program as the scheduled television program that corresponds to the key word of the user.

The processing module 340 is configured to perform scheduling processing on the scheduled television program at a time at which the scheduled television program is played.

After setting the scheduled television program, the digital video device obtains the time at which the scheduled television program is played, and performs scheduling processing on the scheduled television program when the play time is reached. The scheduling processing may include at least one of playing, recording, shielding, or prompting on the apparatus or an associated terminal. The prompting may be in a subtitle manner or a ringtone manner. A specific type of the scheduling processing may be preset by the user.

Referring to FIG. 4, FIG. 4 is a schematic structural diagram of another implementation of an apparatus for scheduling a television program according to this application. Different from the foregoing implementation, the apparatus in this implementation further includes a tracking module 450, and the setting module 330 includes a sending unit 431 and a receiving unit 432.

The tracking module 450 is configured to track an update of the EPG database if the television program that matches the key word is not found in the EPG database.

If the searching module 320 does not find the matched television program after traversing the EPG database, that is, the television program is not to be live broadcast in a next time period such as next seven days to ten days, the tracking module 450 tracks the update of the EPG database, such as regularly detecting whether the EPG database is updated. The digital video device may regularly perform updating according to an update law of the EPG database. For example, the EPG database is usually updated regularly. For example, the EPG database is dynamically updated every day or every week, to obtain information about television programs to be live broadcast in a current or future time period. The digital video device may correspondingly detect an update status of the EPG database every day at zero o'clock or at weekly intervals.

When the EPG database is updated, the searching module 320 is further configured to search updated television program information for the television program that matches the key word.

When the tracking module 450 finds by means of tracking that the EPG database is updated, the searching module 320 searches the updated television program information for the television program that matches the key word. If the television program is not found, the tracking module 450 is instructed to track the update of the EPG database, and the searching module 320 continues to search updated television programs until the television program that matches the key word is found, or an instruction of stopping intelligent searching that is entered by the user is received.

In another implementation, if the matched television program is found in the EPG database, the searching module 320 can also continue to instruct the tracking module 450 to track the update of the EPG, and the searching module 320 continues to search updated television programs to ensure that all potential television programs that match the key word are found until an instruction of stopping intelligent searching that is entered by the user is received.

The sending unit 431 is configured to send information about the found television program to an associated terminal.

In this implementation, the sending unit 431 and the receiving unit 432 establish an association with one or more terminals in advance. For example, the sending unit 431 and the receiving unit 432 communicate with the terminal by using a wired or a wireless channel and are bound to the terminal. The terminal may be specifically a mobile phone, a tablet computer, a desktop computer, or the like. For example, the sending unit 431 is bound to a mobile phone of a user A in advance. After the searching module 320 finds a television program that matches a group of key words entered by the user A, the sending unit 431 sends information about the found television program to the mobile phone of the user A, so that the user A can select a program from the found television program.

It may be understood that when the sending module 431 is associated with terminals of multiple users, the sending module 431 may further send information about a found television program to a terminal of a corresponding user according to the user to which the television program belongs.

The receiving unit 432 is configured to receive a television program fed back by the terminal, and use the television program as a scheduled television program of the user.

For example, after obtaining the television program that is selected by the user A from the foregoing found television program, the terminal feeds the selected television program back to the digital video device. The digital video device determines, as a scheduled television program of the user A, the television program that is fed back by the terminal and that is selected by the user A, stores, in a scheduling list of the user A, information about the scheduled television program such as a name, a start play time, an end play time, a play channel, and a brief introduction, and establishes, in the scheduling list, a mapping relationship between the scheduled television program and a group of corresponding matched key words.

It may be understood that in another implementation, the sending unit does not have to send the information about the television program to the associated terminal, but may directly display the information about the television program on a display interface of the digital video device, and determine the scheduled television program according to selection of the user.

The processing module 340 is specifically configured to: determine whether a conflict exists between times at which the scheduled television programs are played, and if the conflict exists, select a scheduled television program with a highest priority from the scheduled television programs that conflict with each other, and perform scheduling processing on the scheduled television program with the highest priority at a time at which the scheduled television program with the highest priority is played, where the priority is determined by at least one of a user, a type, a channel, and a play time of the scheduled television program, or a type of scheduling processing; and perform, at times at which the scheduled television programs that do not conflict with each other are played, scheduling processing on the scheduled television programs that do not conflict with each other.

The scheduled television program in this implementation includes scheduled television programs of multiple users and/or multiple groups of scheduled television programs of a user. Each group of scheduled television programs corresponds to one group of key words entered by a user, and each group of scheduled television programs may include one or more scheduled television programs. Therefore, after determining the scheduled television program, the processing module 340 determines whether the conflict exists between the times at which all the scheduled television programs that are set by the setting module 330 are played. The conflict is that the play times overlap. If the conflict exists, the scheduled television program with the highest priority is selected from the scheduled television programs that conflict with each other, scheduling processing is performed on the scheduled television program with the highest priority at the time at which the scheduled television program with the highest priority is played, and scheduling processing is not performed on a scheduled television program without the highest priority in the scheduled television programs that conflict with each other. The priority is determined by at least one of a user, a corresponding key word, and a play time of a scheduled television program, or a type of scheduling processing.

Three cases in which a priority is determined are enumerated in the following:
(1) If scheduled television programs that conflict with each other belong to different users, a priority of a user may be determined according to a preset priority list of users, or a usage proportion of different users in different time periods. In a play time period in which a conflict occurs, a higher usage proportion of a user indicates a higher priority of a television program of the user.
(2) If there are scheduled television programs that conflict with each other and that belong to a same user, a priority of a television program may be determined according to frequency at which television programs of different types and/or in different channels are played in different time periods. In a play time period in which a conflict occurs, higher play frequency of television programs of a type or in a channel indicates a higher priority.
(3) If scheduling processing of scheduled television programs that conflict with each other has different types, highest priorities may be set for types of recording, shielding, and prompting in scheduling processing, and a program with a highest priority is selected, as a television program with a highest priority according to (1) and (2), from the scheduled television programs whose type is playing and that conflict with each other.

In the foregoing three cases, (3), (1) and (2) are of descending priorities, that is, the types of recording, shielding, and prompting in the scheduling processing are of the highest priorities without a comparison of users, and a comparison of program types or channels. For a television program whose type is playing, a user with a highest usage proportion is first determined, and a television program whose type or channel has highest play frequency is then determined from television programs of the user with the highest usage proportion as a television program with a highest priority. It should be noted that in the foregoing conflict processing, in consideration of a feature that playing needs to uniquely occupy one television program, only one television program that is with a highest priority and that is scheduled for playing is determined at a play time at which a conflict occurs, and corresponding processing may be performed on television programs of remaining scheduling processing types at play times by using each of the television programs as a television program of a highest priority.

The processing module 340 performs, at the times at which the scheduled television programs that do not conflict with each other are played, scheduling processing on the scheduled television programs that do not conflict with each other.

The foregoing scheduling processing includes at least one of playing, recording, shielding, or prompting on the apparatus and an associated terminal. Television programs of different users may be respectively recorded on corresponding memories, and scheduling processing of different scheduled television programs may be set differently. For example, scheduling processing of a scheduled television program a that is determined according to a group of key words entered by a user A is playing; scheduling processing of a scheduled television program b that is determined according to a group of key words entered by a user B is recording; scheduling processing of a scheduled television program c that is determined according to a group of key words entered by a user C is shielding; scheduling processing of a scheduled television program d that is determined according to a group of key words entered by a user D is prompting. When the scheduled television program a starts to be live broadcast, the digital video device automatically switches to a channel of a to live broadcast a. When the scheduled television program b is live broadcast, the digital video device automatically records the program b to a storage area corresponding to the user B. When the scheduled television program c is live broadcast, the digital video device automatically hides a channel of c. When the scheduled television program d starts to be live broadcast, the digital video device automatically makes, on a television interface, a notification that the program d is to be started.

Referring to FIG. 5, FIG. 5 is a schematic structural diagram of an implementation of a digital video device according to this application. The digital video device 500 in this implementation includes a processor 510, a memory 520, a receiver 530, and a bus 540.

The receiver 530 is configured to receive an EPG that includes television program information of multiple channels in different time periods. The television program information may include a name, a start play time, an end play time, a category, a brief introduction, a specific description, and the like of the television program.

The memory 520 is configured to provide an instruction for the processor 510, and store an EPG database that includes television program information of multiple channels in different time periods. The memory 520 may include at least one of a read-only memory, a random access memory, or a non-volatile random access memory (NVRAM).

The memory 520 stores the following elements: an executable module or a data structure, a subset of an executable module or a data structure, or an extension set of an executable module or a data structure.

Operation instructions include various operation instructions, and are used to implement various operations.

An operating system includes various system programs, and is used to implement various basic services and process hardware-based tasks.

In this embodiment of the present invention, the processor 510 executes the following operations by invoking an operation instruction stored in the memory 520 (the operation instruction may be stored in the operating system).

The processor 510 executes the instruction in the memory 520, so as to:
obtain a key word entered by a user;
traverse the EPG database to find a television program that matches the key word;
set the found television program as a scheduled television program of the user; and
perform scheduling processing on the scheduled television program at a time at which the scheduled television program is played.

Optionally, the scheduled television program includes scheduled television programs of multiple users and/or multiple groups of scheduled television programs of a user, and each group of scheduled television programs corresponds to one group of key words entered by a user.

That the processor 510 executes the performing scheduling processing on the scheduled television program at a time at which the scheduled television program is played includes:
determining whether a conflict exists between times at which the scheduled television programs are played, and if the conflict exists, selecting a scheduled television program with a highest priority from the scheduled television programs that conflict with each other, and performing scheduling processing on the scheduled television program with the highest priority at a time at which the scheduled television program with the highest priority is played, where the priority is determined by at least one of a user, a type, a channel, and a play time of the scheduled television program, or a type of scheduling processing; and
performing, at times at which the scheduled television programs that do not conflict with each other are played, scheduling processing on the scheduled television programs that do not conflict with each other.

Specifically, a manner in which priorities of the scheduled television programs that conflict with each other are determined is the same as a manner of determining in the foregoing implementation, and details are not repeatedly described herein.

Optionally, the digital video device 500 further includes a transmitter 550.

That the processor 510 executes the setting the found television program as a scheduled television program of the user includes:
sending information about the found television program to an associated terminal by using the transmitter 550; and
receiving, by using the receiver 530, a television program fed back by the terminal, and using the television program as the scheduled television program of the user.

Optionally, the scheduling processing includes at least one of playing, recording, shielding, or prompting on the digital video terminal 500 or an associated terminal. Television programs of different users may be respectively recorded on corresponding memories, and scheduling processing of different scheduled television programs may be set differently.

Optionally, the processor 510 is further configured to:
track an update of the EPG database if the television program that matches the key word is not found in the EPG database, such as regularly detecting whether the EPG database is updated; and
when the EPG database is updated, search updated television program information for the television program that matches the key word.

The processor 510 may also be referred to as a CPU (Central Processing Unit, central processing unit). In specific application, all components of the digital video device are coupled together by using the bus 540. The bus 540 may include a power supply bus, a control bus, a status signal bus, and the like in addition to a data bus. However, for clear description, various buses in the figure are marked as the bus 540.

The methods disclosed in the foregoing embodiments of the present invention may also be applied to the processor 510, or implemented by the processor 510. The processor 510 may be an integrated circuit chip and has a signal processing capability. In an implementation process, the steps in the foregoing methods may be completed by means of an integrated logic circuit of hardware in the processor 510 or an instruction in a form of software. The foregoing processor 510 may be a general-purpose processor, a digital signal processor (DSP), an application-specific integrated circuit (ASIC), a field programmable gate array (FPGA) or another programmable logic device, discrete gate or transistor logic device, or discrete hardware component. The processor 510 may implement or perform the methods, the steps, and logical block diagrams disclosed in the embodiments of the present invention. The general-purpose processor may be a microprocessor, or this processor may be any conventional processor, or the like. The steps of the methods disclosed with reference to the embodiments of the present invention may be directly executed and completed by a hardware decoding processor, or executed and completed by a combination of hardware and software modules in a decoding processor. The software module may be located in a mature storage medium in the field, such as a random access memory, a flash memory, a read-only memory, a programmable read-only memory, an electrically erasable programmable memory, or a register. The storage medium is located in the memory 520. The processor 510 reads information from the memory 520, and completes the steps of the foregoing methods in combination with the hardware of the processor 510.

In the foregoing solutions, a digital video device can find a related television program from an EPG database according to a key word entered by a user, and automatically perform corresponding scheduling processing on the television program at a time at which the television program is played. The user does not need to blindly search lists of television programs in the EPG for the television program one by one to schedule the television program. Therefore, the television program is intelligently and quickly scheduled.

In the several embodiments provided in this application, it should be understood that the disclosed system, apparatus, and method may be implemented in other manners. For example, the described apparatus embodiment is merely an example. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or a part of the technical solutions may be implemented in the form of a software product. The software product is stored in a storage medium and includes several instructions for instructing a computer device (which may be a personal computer, a server, or a network device) or a processor (processor) to perform all or a part of the steps of the methods described in the implementations of this application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

## Claims

1. A method for scheduling a television program, comprising:
obtaining, by a digital video device, a key word entered by a user, wherein an electronic program guide EPG database that comprises television program information of multiple channels in different time periods is set in the digital video device;
traversing the EPG database to find a television program that matches the key word;
setting the found television program as a scheduled television program of the user; and
performing scheduling processing on the scheduled television program at a time at which the scheduled television program is played.

2. The method according to claim 1, wherein the scheduled television program comprises scheduled television programs of multiple users and/or multiple groups of scheduled television programs of a user, and each group of scheduled television programs corresponds to one group of key words entered by a user; and
the performing scheduling processing on the scheduled television program at a time at which the scheduled television program is played comprises:
determining whether a conflict exists between times at which the scheduled television programs are played, and if yes, selecting a scheduled television program with a highest priority from the scheduled television programs that conflict with each other, and performing scheduling processing on the scheduled television program with the highest priority at a time at which the scheduled television program with the highest priority is played, wherein the priority is determined by at least one of a user of the scheduled television program, a type of the scheduled television program, a channel of the scheduled television program, a play time of the scheduled television program, and a type of scheduling processing of the scheduled television program; and
performing, at times at which the scheduled television programs that do not conflict with each other are played, scheduling processing on the scheduled television programs that do not conflict with each other.

3. The method according to claim 1, wherein the setting the found television program as a scheduled television program of the user comprises:
sending information about the found television program to an associated terminal; and
receiving a television program fed back by the terminal, and using the television program as the scheduled television program of the user.

4. The method according to claim 1, wherein before the setting the found television program as a scheduled television program of the user, the method further comprises:
tracking an update of the EPG database if the television program that matches the key word is not found in the EPG database; and
when the EPG database is updated, searching updated television program information for the television program that matches the key word.

5. The method according to claim 1, wherein
the scheduling processing comprises at least one of playing, recording, shielding, and prompting on the digital video terminal or an associated terminal.

6. An apparatus for scheduling a television program, comprising: an obtaining module, a searching module, a setting module, and a processing module, wherein
the obtaining module is configured to obtain a key word entered by a user, and send the key word to the searching module, wherein an electronic program guide EPG database that comprises television program information of multiple channels in different time periods is set in the digital video device;
the searching module is configured to traverse the EPG database to find a television program that matches the key word, and send the found television program to the setting module;
the setting module is configured to set the found television program as a scheduled television program of the user; and
the processing module is configured to perform scheduling processing on the scheduled television program at a time at which the scheduled television program is played.

7. The apparatus according to claim 6, wherein the scheduled television program comprises scheduled television programs of multiple users and/or multiple groups of scheduled television programs of a user, and each group of scheduled television programs corresponds to one group of key words entered by a user; and
the processing module is specifically configured to:
determine whether a conflict exists between times at which the scheduled television programs are played, and if the conflict exists, select a scheduled television program with a highest priority from the scheduled television programs that conflict with each other, and perform scheduling processing on the scheduled television program with the highest priority at a time at which the scheduled television program with the highest priority is played, wherein the priority is determined by at least one of a user of the scheduled television program, a type of the scheduled television program, a channel of the scheduled television program, a play time of the scheduled television program, and a type of scheduling processing of the scheduled television program; and
perform, at times at which the scheduled television programs that do not conflict with each other are played, scheduling processing on the scheduled television programs that do not conflict with each other.

8. The apparatus according to claim 6, wherein the setting module comprises a sending unit and a receiving unit, wherein
the sending unit is configured to send information about the found television program to an associated terminal; and
the receiving unit is configured to receive a television program fed back by the terminal, and use the television program as the scheduled television program of the user.

9. The apparatus according to claim 6, further comprising: a tracking module, wherein
the tracking module is configured to track an update of the EPG database if the television program that matches the key word is not found in the EPG database; and
the searching module is further configured to: when the EPG database is updated, search updated television program information for the television program that matches the key word.

10. The apparatus according to claim 6, wherein
the scheduling processing comprises at least one of playing, recording, shielding, and prompting on the apparatus or an associated terminal.

11. A digital video device, comprising: a processor, a receiver, and a memory, wherein
the receiver is configured to receive an electronic program guide EPG that comprises television program information of multiple channels in different time periods;
the memory is configured to provide an instruction for the processor, and store an electronic program guide EPG database that comprises television program information of multiple channels in different time periods; and
the processor executes the instruction, so as to:
obtain a key word entered by a user;
traverse the EPG database to find a television program that matches the key word;
set the found television program as a scheduled television program of the user; and
perform scheduling processing on the scheduled television program at a time at which the scheduled television program is played.

12. The digital video device according to claim 11, wherein the scheduled television program comprises scheduled television programs of multiple users and/or multiple groups of scheduled television programs of a user, and each group of scheduled television programs corresponds to one group of key words entered by a user; and
that the processor executes the performing scheduling processing on the scheduled television program at a time at which the scheduled television program is played comprises:
determining whether a conflict exists between times at which the scheduled television programs are played, and if the conflict exists, selecting a scheduled television program with a highest priority from the scheduled television programs that conflict with each other, and performing scheduling processing on the scheduled television program with the highest priority at a time at which the scheduled television program with the highest priority is played, wherein the priority is determined by at least one of a user of the scheduled television program, a type of the scheduled television program, a channel of the scheduled television program, a play time of the scheduled television program, and a type of scheduling processing of the scheduled television program; and
performing, at times at which the scheduled television programs that do not conflict with each other are played, scheduling processing on the scheduled television programs that do not conflict with each other.

13. The digital video device according to claim 11, further comprising: a transmitter, wherein
that the processor executes the setting the found television program as a scheduled television program of the user comprises:
sending information about the found television program to an associated terminal by using the transmitter; and
receiving, by using the receiver, a television program fed back by the terminal, and using the television program as the scheduled television program of the user.

14. The digital video device according to claim 11, wherein the processor is further configured to:
track an update of the EPG database if the television program that matches the key word is not found in the EPG database; and
when the EPG database is updated, search updated television program information for the television program that matches the key word.

15. The digital video device according to claim 11, wherein
the scheduling processing comprises at least one of playing, recording, shielding, and prompting on the digital video terminal or an associated terminal.
